# EUROPEAN PATENT APPLICATION

(11) **EP 2 889 828 A1**
(43) Date of publication of application: **01.07.2015**
(21) Application number: 13199865.0
(22) Date of filing: 31.12.2013
(51) Int. Cl.: G06Q 40/06

(54) **Securities transaction platform system**

(71) Applicant: Hsu, Wen-Chien, 813 Kaohsiung City (TW)
(72) Inventor: Hsu, Wen-Chien, 813 Kaohsiung City (TW)
(74) Representative: Gallego Jiménez, José Fernando

(57) **Abstract**

Disclosed is a securities transaction platform system provided for an investor to perform a securities transaction, comprising: a registering module, an financial institution account confirming module, an account connecting module and a transaction executing module, by which it allows an investor to register an account of the system and connects this registered account to a financial institution account of the investor after the financial institution account has been confirmed, so as to enable the investor to conduct a monetary transfer between the registered account and the financial institution account to thus perform a regular securities transaction or an individual person securities transaction on the securities transaction platform system.

## Description

### FIELD OF THE INVENTION

The present invention relates to a transaction platform system, and more particularly to a securities transaction platform system.

### BACKGROUND OF THE INVENTION

A security is a kind of tradable financial instruments, whose main advantage is for quickly raising a financial capital and for allocating the capital to thus activate the activities of financial, economic and investment, and therefore a securities transaction is widely operated in many countries.

According to the regulations in most of the countries regarding securities transaction, an investor needs to have accounts both in a securities company and in a financial institution designated by the securities company before operating a securities transaction. Therefore, an investor is required to go to the designated financial institution for opening an account. Such prerequisite procedure is far from convenient for an investor, and it is even more complicated than the imagination when an international securities transaction is involved.

Therefore, it is an important issue for providing a busy investor an efficient, humanized multifunctional platform for operating securities transaction in a more convenient way to act as a connecting bridge between an investor, a financial institution and any other related institutions.

### SUMMARY OF THE INVENTION

In view of above, it is an object of the present invention to provide a securities transaction platform system for assisting an investor to perform a securities transaction.

Therefore, the present invention overcomes the technical problems in the conventional art and provides a securities transaction platform system that is for an investor to perform a securities transaction, comprising: a registering module for the investor to register an account of the securities transaction platform system; a financial institution account confirming module for confirming a financial institution account of the investor by performing a financial information confirmation with the investor in accordance with respect to the registered account; an account connecting module for connecting the registered account to the confirmed financial institution account to thus enable the investor to conduct a monetary transfer between the registered account and the financial institution account; and a transaction executing module for executing a securities transaction after the financial institution account has been confirmed, wherein said securities transaction is a regular securities transaction and/or an individual person securities transaction.

According to an embodiment of the present invention, the confirmed financial institution account is the only financial institution account of the investor for the securities transaction platform system.

According to an embodiment of the present invention, the securities transaction platform system further comprises a nationality distinguishing module for distinguishing the nationality of the investor so that the securities transaction is performed with respect to the distinguished nationality of the investor.

According to an embodiment of the present invention, the securities transaction platform system is provided with a web-based homepage, which is displayed in accordance with the distinguished nationality of the investor, so that a visitor can perform the securities transaction based on his/her distinguished nationality.

According to an embodiment of the present invention, the securities transaction platform system further comprises an account rank configuring module for the investor to determine an account rank of the registered account.

According to an embodiment of the present invention, the securities transaction platform system further comprises a partner introducing module for directing a partner into the securities transaction platform system in such a manner that the partner can provide a service to the investor in the securities transaction platform system.

According to an embodiment of the present invention, the securities transaction platform system further comprises a trading point top up module for topping up a trading point that is tradable on the securities transaction platform system by use of a prepaid serial number or a monetary transfer from the financial institution account.

According to an embodiment of the present invention, the securities transaction platform system further comprises a transaction messenger module for the investor to perform the securities transaction through a text message or a video call.

According to an embodiment of the present invention, the securities transaction platform system further comprises a message recording module for recording a text massage and/or video transmitted in the securities transaction.

According to an embodiment of the present invention, the securities transaction platform system further comprises a transaction record inquiring module for outputting a transaction record of the securities transaction of the investor.

By means of technical means of the present invention, an investor is able to perform a securities transaction on the securities transaction platform system in a quicker and easier manner to thus eliminate the necessity of personally going to a financial institution for opening an account. Further, an investor can precisely communicate an instruction by means of a text message or a video call for performing a securities transaction to, and accordingly all the communication messages thereof are recorded as an evidence for any possibility of disputations in the future. Moreover, the securities transaction platform system of the present invention also provides various types of full services for assisting the investor to perform various finance related operations.

### BRIEF DESCRIPTION OF THE DRAWINGS

The structure and the technical means adopted by the present invention to achieve the above and other objects can be best understood by referring to the following detailed description of the preferred embodiments and the accompanying drawings.
Fig. 1 is a block diagram of a securities transaction platform system according to an embodiment of the present invention; and
Figs. 2a to 2e are schematic diagrams illustrating a user interface of the securities transaction platform system according to an embodiment of the present invention.

### DETAILED DESCRIPTION OF THE PREFERRED EMBODIMENTS

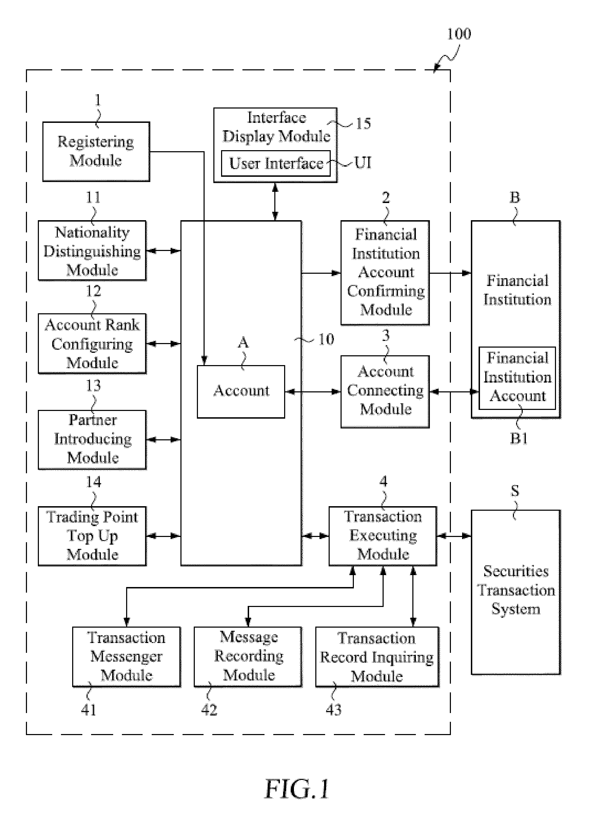

Embodiments are described in detail as below in reference to the Figs. 1 to 2e, and the description is used for explaining the embodiments of the present invention only, and not for limiting the scope of the claims.

As shown in Fig. 1, a securities transaction platform system 100 according to one embodiment of the present invention that is for an investor to perform a securities transaction, comprises: a registering module 1 for providing the investor to register an account A of the securities transaction platform system 100; a financial institution account confirming module 2 for confirming a financial institution account B1 of the investor by performing a financial information confirmation with respect to the investor according to the registered account A; an account connecting module 3 for connecting the registered account A to the confirmed financial institution account B1 to thus enable the investor to conduct a monetary transfer between the registered account A and the financial institution account B1; and a transaction executing module 4 for executing a securities transaction after the financial institution account B1 has been confirmed, wherein said securities transaction is a regular securities transaction and/or an individual person securities transaction.

Specifically, in one embodiment of the present invention, an investor applies the registering module 1 to register an account in his/her real name on a transaction platform module 10 of the securities transaction platform system 100. During the step of registration, the registering module 1 initially verifies an identity of the investor by means of an E-mail or an SMS message. Accordingly, the financial institution account confirming module 2 actively connects a transactional financial institution B, e.g., a bank, for confirming and verifying the identity of the investor. After the identity has been verified, the financial institution account confirming module 2 will take the financial institution account B1 as a confirmed valid account. Preferably, the confirmed financial institution account B1 will be regarded as the only financial institution account of the investor in the securities transaction platform system 100.

After the confirmation of the financial institution account B1, the account connecting module 3 will establish a connection between the financial institution account B1 and the registered account A to thus enable a monetary flow transfer from the financial institution account B1 to the registered account A. Thus, the investor can use the money transferred to the registered account A for performing a regular securities transaction and/or for an individual person securities transaction by use of the transaction executing module 4 connected to a securities transaction system S.

As shown in Fig. 1, according to one embodiment of the present invention, the securities transaction platform system 100 further comprises a nationality distinguishing module 11 for distinguishing a nationality of the investor whereby the securities transaction is performed according to the distinguished nationality of the investor. In other words, the securities transaction platform system 100 of the present invention is provided with platforms to respectively service for a domestic securities transaction and an international securities transaction.

As shown in Fig. 1, according to one embodiment of the present invention, the securities transaction platform system 100 further comprises an account rank configuring module 12 for an investor to determine an account rank for the registered account A. The registered account A is usually provided with two types of ranks including a regular member and a VIP member who is with a higher rank. A regular member privilege is restricted in performing an operation only associated with securities transactions. A VIP member privilege, which can be gained by paying an annual fee, further comprises extra services such as accessing a detailed information of some specific securities and issuers, and a participation of other exclusive VIP activities, etc.

As shown in Fig.1, according to one embodiment of the present invention, the securities transaction platform system 100 further comprises a partner introducing module 13 for directing a partner into the securities transaction platform system 100 in order to provide services of the partner for an investor on the securities transaction platform system 100. In addition to services related to a securities transaction, the securities transaction platform system 100 also provides various types of full services for an investor including: a payment service for paying bills of a loan, a bills of credit card, a bills of telephone, a bills of public utility, etc.; a booking service for booking a hotel room, a game ticket, an itinerary tour, a restaurant reservation, etc.; and a donation service for transferring donations into charity's account, by means of the securities transaction platform system 100.

As shown in Fig. 1, according to one embodiment of the present invention, the securities transaction platform system 100 further comprises a trading point top up module 14 for topping up a trading point that is tradable on the securities transaction platform system 100 and is tradable by a prepaid serial number or a monetary transfer from the financial institution account B1. By topping up a trading point of the securities transaction platform system 100, a user can use the trading point to perform a securities transaction and enjoy various other services in a safe way.

As shown in Fig. 1, according to one embodiment of the present invention, the transaction executing module 4 is connected to a transaction messenger module 41, a message logging module 42 and a transaction record inquiring module 43.

The transaction messenger module 41 is for providing an investor a convenient way to make discussion with a securities dealer and perform the securities transaction through a text message or a video call in real-time. The message logging module 42 is for logging a text message and/or video transmitted over the securities transaction as an evidence for a disputation in the future. The transaction record inquiring module 43 is for outputting a securities transaction record of the investor. For example, the transaction record inquiring module 43 can automatically output all of the securities transaction records of the investor recorded within this month, or alternatively output a specific securities transaction within this year by a manual request of an investor.

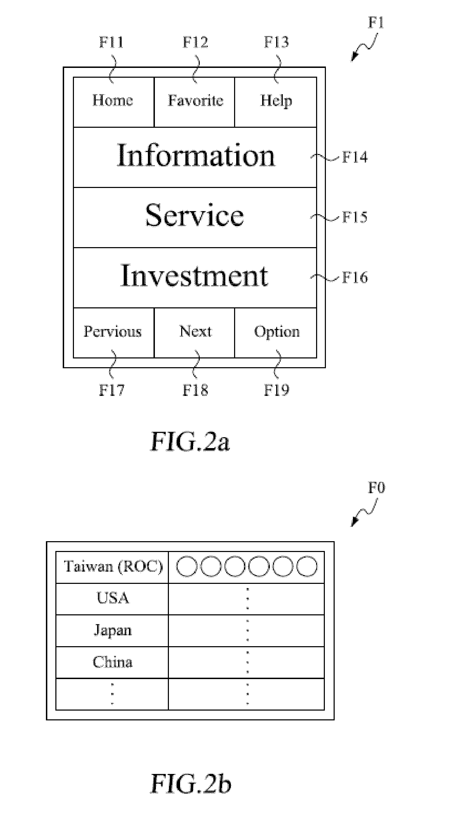

Next, a user interface of the securities transaction platform system 100 will be described below in accordance with an embodiment of the present invention by referring to Figs. 2a to 2e.

According to one embodiment of the present invention, as shown in Fig. 1, the securities transaction platform system 100 further includes an interface display module 15 for displaying a user interface UI of the securities transaction platform system 100 in a form of webpage or the like.

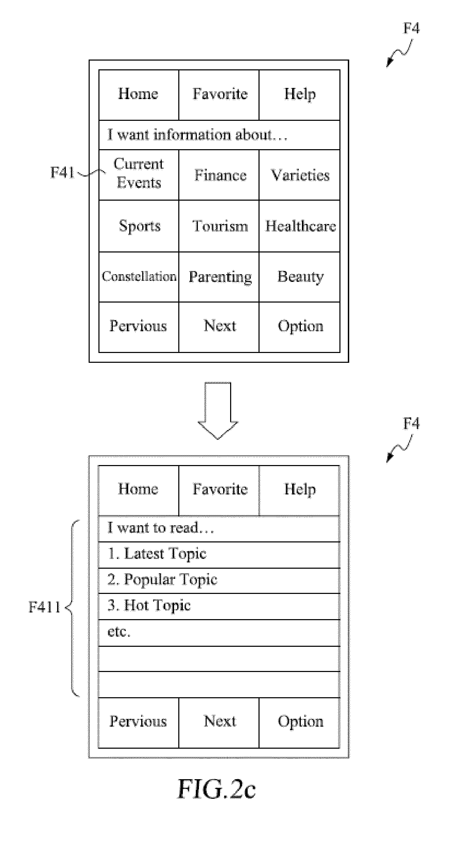

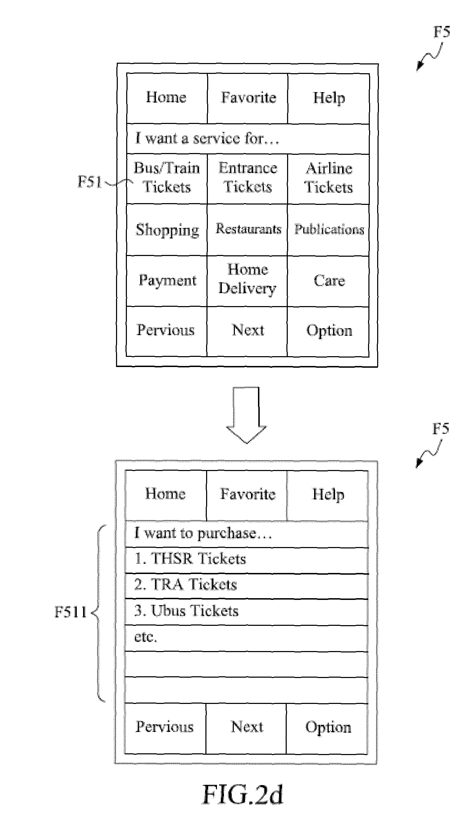

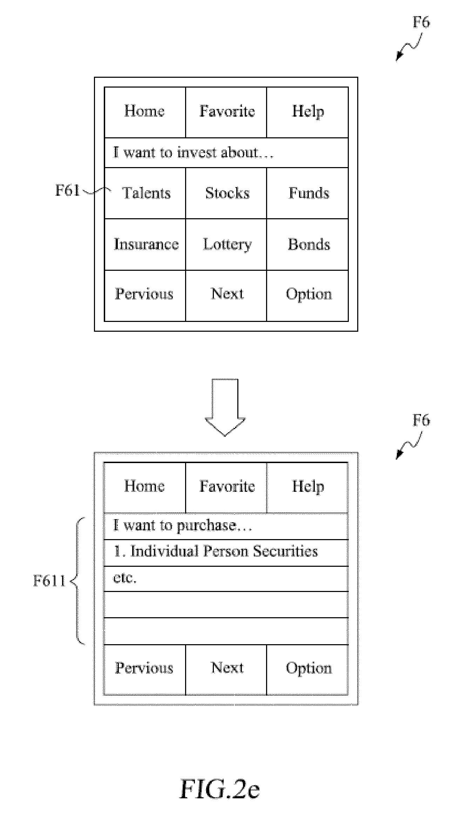

As shown in Fig. 2a, the user interface UI is provided with multiple function blocks F11, F12, F13, F14, F15, F16, F17, F18 and F19, each of which has its different function on a main page F1. In the embodiment, the user interface UI will return to a home page F0 when the function block F11 is tapped/clicked. A user's favorite page is chosen when the function block F12 is tapped/clicked. By tapping/clicking the function block F12, a user can directly access a frequently used function that has been previously set as a favorite one without the necessity of tapping/clicking page by page. When the function block F13 is tapped/clicked, it will contact a customer service to look for an assistance regarding the operation of the securities transaction platform system 100 or to report a system failure. The function blocks F14, 15 and 16 are respectively linked to an information selecting page F4 (Fig. 2c), a service selecting page F5 (Fig. 2d) and an investment selecting page (Fig. 2e). The function blocks F17 and F18 are used for switching to next/pervious page respectively. The function block F19 is used for changing the background, the font face, the font size and related settings of the user interface UI.

As shown in Fig. 2b, the home page F0, i.e. a web-based homepage, is displayed in accordance with the distinguished nationality of an investor by the nationality distinguishing module 11, in order to perform the securities transaction based on his/her distinguished nationality. Specifically, the user interface UI is displayed with a locale in accordance with the distinguished nationality in which the setting thereof can be varied with respect to the different nationalities.

As shown in Fig. 2c, the information selecting page F4 shows several information option blocks F41 that are in relation to different information such as current events, finance, varieties, sports, tourism, healthcare, constellation, parenting, beauty and so on. When an information option block F41 is tapped/clicked, a detailed content of the corresponding information will be displayed.

As shown in Fig. 2d, the service selecting page F5 shows several service option blocks F51 in relation to different services such as bus/train tickets, entrance tickets, airline ticket, shopping, restaurants, publications, payment, home delivery, care and so on. When a service option blocks F51 is tapped/clicked, a detailed content of the corresponding service will be displayed.

As shown in Fig. 2e, the investment selecting page F6 shows various investment option blocks F61 in relation to different investment items such as: talents, stocks, funds, insurance, lottery, bonds and so on. When an investment option block F61 is tapped/clicked, a detailed content of the corresponding investing item will be displayed.

By means of above technical means, an investor is able to perform a securities transaction on the securities transaction platform system of the present invention in a quick and easy manner to thus eliminate the troublesome procedures of opening a financial institution account. Further, the investor can perform the securities transaction through a text message or a video call to precisely communicate an instruction, and all the communication messages of the securities transaction will be recorded as an evidence for an unexpected disputation in the future. Moreover, the securities transaction platform system of the present invention also provides different types of full services for assisting the investor to perform various related operations.

The above description should be considered as only the discussion of the preferred embodiments of the present invention. However, a person having an ordinary skill in the art may make various modifications to the present invention. Moreover, such modifications still fall within the spirit and scope defined by the appended claims

## Claims

1. A securities transaction platform system that is for an investor to perform a securities transaction, comprising:
a registering module for the investor to register an account of the securities transaction platform system;
a financial institution account confirming module for confirming a financial institution account of the investor by performing a financial information confirmation with respect to the investor in accordance with the registered account;
an account connecting module for connecting the registered account to the confirmed financial institution account to thus enable the investor to conduct a monetary transfer between the registered account and the financial institution account; and
a transaction executing module for executing a securities transaction after the financial institution account has been confirmed, wherein said securities transaction is a regular securities transaction and/or an individual person securities transaction.

2. The securities transaction platform system as claimed in claim 1, wherein the confirmed financial institution account is the only financial institution account of the investor for the securities transaction platform system.

3. The securities transaction platform system as claimed in claim 1, further comprising a nationality distinguishing module for distinguishing the nationality of the investor so that the securities transaction is performed with respect to the distinguished nationality of the investor.

4. The securities transaction platform system as claimed in claim 1, wherein the securities transaction platform system is provided with a web-based homepage, which is displayed in accordance with the distinguished nationality of the investor, so that a visitor can perform the securities transaction based on his/her distinguished nationality.

5. The securities transaction platform system as claimed in claim 1, further comprising an account rank configuring module for the investor to determine an account rank of the registered account.

6. The securities transaction platform system as claimed in claim 1, further comprising a partner introducing module for directing a partner into the securities transaction platform system in such a manner that the partner can provide a service to the investor in the securities transaction platform system.

7. The securities transaction platform system as claimed in claim 1, further comprising a trading point top up module for topping up a trading point that is tradable on the securities transaction platform system by use of a prepaid serial number or a monetary transfer from the financial institution account.

8. The securities transaction platform system as claimed in claim 1, further comprising a transaction messenger module for the investor to perform the securities transaction through a text message or a video call.

9. The securities transaction platform system as claimed in claim 1, further comprising a message recording module for recording a text message and/or video transmitted in the securities transaction.

10. The securities transaction platform system as claimed in claim 1, further comprising a transaction record inquiring module for outputting a transaction record of the securities transaction of the investor.
